# EUROPEAN PATENT APPLICATION

(11) **EP 4 080 095 A1**
(43) Date of publication of application: **26.10.2022**
(21) Application number: 22168624.9
(22) Date of filing: 15.04.2022
(51) Int. Cl.: F16K 11/074, A47L 15/00, A47L 15/42

(54) **LIQUID MIXING APPARATUS**

(30) Priority: 24.04.2021 CN 202110444674; 01.04.2022 CN 202210339458
(71) Applicant: Ding, Guilin, Jiujiang, Jiangxi (CN)
(72) Inventor: Ding, Guilin, Jiujiang, Jiangxi (CN)
(74) Representative: Huang, Liwei

(57) **Abstract**

The present invention discloses an apparatus for mixing liquid, including a temperature regulating valve lever (15); the first end of the temperature regulating valve lever (15) is connected to a first component (1), the first component being (1) connected to both the first pathway (20) and the second pathway (20), making the liquid in the first pathway mix with the liquid in the second pathway in a first ratio within the temperature regulating valve lever (15), the first ratio being controlled by the first component (1); a liquid outputting assembly (81, 82) is sleeved inside the temperature regulating valve lever (15), the liquid outputting assembly moves in the direction of the first end of the temperature regulating valve lever (15), the inside liquid of the temperature regulating valve lever (15) moves in the direction of the second end of the temperature regulating valve lever (15) and flows out through the liquid outputting assembly (81, 82), the second end is opposite to the first end. The apparatus may easily mix different liquid according to the ratio of demand.

## Description

### TECHNICAL FIELD

The present invention belongs to the field of cleaning technology, specifically, relates to a liquid mixing apparatus.

### BACKGROUND

In daily life, inner wall of the cup may remain the scrap of drinks and juice after usage. There are usually two steps to clean the cups, the first step is the surface cleaning, the second step is the the initial cleaning of the inner wall. In the process of cleaning the inner wall of the cup, the cleaning is actually not complete, and exist the cleaning difficulty issue. People may cost much time cleaning the inner wall of the cup, and it is not conductive to clean with high efficiency.

Therefore, there is a demand to develop a new cleaning apparatus to resolve the issue.

### BRIEF SUMMARY

The present invention is aimed to provide a liquid mixing apparatus, and resolve the cleaning issue of the inner wall of present container is hereby difficult and no hot water spray.

To achieve the above purpose, the present invention provides the following technical solution relating: a liquid mixing apparatus, the apparatus includes a thermostatic valve lever, connected to both a first pathway and a second pathway, a liquid outputting assembly is provided inside the thermostatic valve lever.

When the liquid outputting assembly moves towards the first end, liquid in the thermostatic valve lever passes through the liquid outputting assembly and flows out in a direction away from the first pathway and second pathway., the first end is close to the one end of the first pathway and the second pathway.

The first end of the thermostatic valve lever is connected to a first component, the first component being connected to both the first pathway and the second pathway, making the liquid in the first pathway mix with the liquid in the second pathway within the thermostatic valve lever in a first ratio, the first ratio being controlled by the first component;

The liquid outputting assembly is sleeved inside the thermostatic valve lever, when the liquid outputting assembly moves towards the first end of the thermostatic valve lever, liquid inside the thermostatic valve lever moves through the liquid outputting assembly towards a second end of the thermostatic valve lever and thus flows out, wherein the second end is opposite to the first end.

In the design scheme of the present invention, the first component includes a first mixing part and a second mixing part.

One end of the first mixing part is connected with the first end, and the other end of the first mixing part is connected with the second mixing part; by moving the thermostatic valve lever, the first mixing part is moved, so that the liquid from the first pathway and the liquid from the second pathway are mixed.

In the design scheme of the present invention, the first mixing part is provided with a first through hole; the second mixing part is provided with two second through holes; the two second through holes are connected to the first pathway and the second pathway respectively; when the first mixing part is moved, the first through hole is able to partially cover the second through hole(s), so as to control the ratio of liquid from the two second through holes.

In the design scheme of the present invention, the thermostatic valve lever has a through path in vertical direction, and is connected with the first mixing part; the first end, the first mixing part, the second mixing part and a base are provided inside the valve shell.

In the design scheme of the present invention, the first mixing part is a valve plate or a piston, the second mixing part is a three-way pipe; the valve plate or the piston is located inside the three-way pipe; one port of the three-way pipe is connected to the liquid outputting assembly, the other two ports of the three-way pipe are connected to the first pathway and the second pathway respectively; when the valve plate or the piston is moved, surfaces of the valve plate or the piston contacting the liquid in the other two ports of the three-way pipe are changed, so as to mix the liquid from the first pathway and the liquid from the second pathway.

In the design scheme of the present invention, the liquid outputting assembly includes a liquid output switch and a first liquid outputting rod; the thermostatic valve lever is connected to the liquid output switch; at least a part of the first liquid outputting rod is inserted into the inner cavity of the thermostatic valve lever.

In the design scheme of the present invention, the liquid output switch includes a switch core and an elastic part.

The switch core is hollow inside, with an opening at one end near the first liquid outputting rod, connecting to the first liquid outputting rod, and at least one liquid inlet is provided on the outer wall and is connected to the inside of the switch core.

The elastic part is provided on the outer side of the switch core and connected to the bottom end of the first liquid outputting rod.

In the design scheme of the present invention, the thermostatic valve lever is provided with a step on the inner wall; the liquid outputting assembly includes a second liquid outputting rod, at least a part of the second liquid outputting rod is inserted into the inner cavity of the thermostatic valve lever; the bottom end of the second liquid outputting rod connects to the step, and there is a gap between the outer wall of the second liquid outputting rod and the thermostatic valve lever.

In the design scheme of the present invention, the apparatus further includes an elastic part.

The second liquid outputting rod is hollow inside, the second liquid outputting rod is provided with an opening at the end of the internal cavity of the thermostatic valve lever not extending into the cavity, and at least one liquid inlet is provided on the outer wall.

One end of the elastic part is connected to the bottom of the second liquid outputting rod, the other end is connected to the first component.

In the design scheme of the present invention, the apparatus further including a valve shell and a base, wherein the first end, the first component and the base are provided inside the valve shell.

In the design scheme of the present invention, the apparatus further includes a liquid outputting nozzle and a bracket pad, the liquid outputting nozzle being connected to the liquid outputting rod; the bracket pad being provided on the liquid outputting rod.

In the design scheme of the present invention, the apparatus further includes a liquid discharge container, wherein the liquid discharge container has an opening.

In the design scheme of the present invention, the thermostatic valve lever is provided with a handle for regulating temperature.

In the design scheme of the present invention, a gasket is provided between the thermostatic valve lever, the first component and the liquid outputting assembly.

In the design scheme of the present invention, a liquid mixing apparatus, including a thermostatic valve lever. The thermostatic valve lever is connected to both the first pathway and the second pathway, the liquid outputting assembly is provided inside the thermostatic valve lever, one end of the liquid outputting assembly is provided with a liquid outputting nozzle, and the liquid outputting assembly is provided with a bracket pad.

When the bracket pad moves toward the other end of the liquid outputting assembly, the liquid in the thermostatic valve lever passes through the liquid outputting assembly and is ejected through the liquid outputting nozzle.

Compared with the prior art, the beneficial effects of the present invention are:
(1) The apparatus may freely adjust different temperatures or the ratio of mixing liquids(e.g. water and cleaning solution), and combine with pressurized spray to clean the inner wall of the container. The apparatus may dissolve and clean the residue and juice on the inner wall of the container, with short time and high efficiency, and is suitable for promotion and application.
(2) The apparatus has an ingenious structure and may be directly installed and hidden in the installation hole of the countertop, without occupying extra space.

### BRIEF DESCRIPTION OF THE DRAWINGS

FIG.1 is a schematic diagram of the overall structure of the first embodiment of the present invention;
FIG. 2 is a schematic diagram of the structure of the thermostatic mechanism and the pressing mechanism of the first embodiment of the present invention;
FIG. 3 is an exploded view of FIG 2;
FIG. 4 is a schematic diagram of the structure of the switch core of the present invention;
FIG. 5 is a schematic diagram of the structure of the thermostatic mechanism and the pressing mechanism of the second embodiment of the present invention;
FIG.6 is an exploded view of FIG 5;
FIG. 7 shows a schematic diagram of the structure of the second liquid outputting rod of the present invention;
FIG. 8 is a schematic diagram of the structure of the present invention; and
FIG. 9 is a schematic diagram of the structure of the drainage tray and its internal thermostatic handle and bracket pad of the present invention.

### DRAWINGS MARK:

1-Thermostatic valve lever;
2-Up porcelain tile;
3-Down porcelain tile;
4-Base;
5-Valve shell;
6-First water through hole;
7-Second water through hole;
8-Water outputting assembly;
9-Tabs;
10-Elastic part;
11-Switch core;
12-First water inlet;
13-Second water inlet;
14-Step;
15-Thermostatic handle;
16-Water outputting nozzle;
17-Bracket pad;
18-Body;
19-Drain pan;
20-External water pipe;
21-Locking parts;
81-First water outputting rod;
82-Second water outputting rod;
101-Spring;
102-Tapered spring;
210-Rubber gasket;
211-Stainless steel gasket;
212-Hexnut; and
213-Puller bolt.

### DETAILED DESCRIPTION

The technical solution in the exemplary embodiment of the present disclosure will be clearly described in combination with the accompanying drawings. Obviously, the described embodiments are only some of the exemplary embodiments of the present disclosure, not all of the embodiments. Based on the exemplary embodiments of the present disclosure, all other embodiments obtained by those of ordinary skilled in the art without exerting creative effort shall fall within the scope of protection of the present invention.

In some exemplary embodiments, the present invention provides a liquid mixing apparatus, including a thermostatic valve lever; a first end of the thermostatic valve lever is connected to a first component, and the first component is connected to both a first pathway and a second pathway, making the liquid in the first pathway mix with the liquid in the second pathway within the thermostatic valve lever in a first ratio. Wherein, the first end may refer to the up portion or the down portion of the thermostatic valve lever, this embodiment is only exemplified by the down portion. The first component is used for mixing liquid. The first pathway and the second pathway may be a hot water pathway or a cold water pathway respectively. One of the pathway may also be a cleaning solution pathway, and the liquid in the first pathway and the second pathway may also be other liquid to be mixed. In addition, the first ratio may be any ratio between 0 and 100%, so that any liquid of pure hot water, pure cold water, warm water or a liquid mixed with a ratio of the cleaning solution may be obtained according to the demand. Thus the mixing liquid from different pathways is realized, and the cleaning efficiency is increased. When the liguid in a certain pathway is cleaning solution, the cleaning solution is stored in the pathway, thus cleaning containers is not necessary to dip a rag into the cleaning solution as traditional, which reduces the trouble of hand cleaning and avoid hurting hands as well.

Further, the liquid outputting assembly is sleeved inside the thermostatic valve lever, when the liquid outputting assembly moves downward along the thermostatic valve lever under the action of an external force, the inside liquid of the thermostatic valve lever moves upward and flows out through the liquid outputting assembly, a second end is opposite to the first end, the second end is only exemplified in this embodiment by the up part. This enables the automatic upward discharge of liquid under the action of an external force.

Further, the first component includes a first mixing part and a second mixing part. One end of the first mixing part is connected with the first end, and the other end of the first mixing part is connected with the second mixing part. By moving the thermostatic valve lever, the first mixing part is moved, so that the liquid from the first pathway and the liquid from the second pathway are mixed. The first mixing part and the second mixing part may be sheet, column, etc., and materials may be porcelains, metals, polymeric materials (PPR, etc.), plastics (resin), etc.

Further, in one embodiment, the first mixing part is provided with a first through hole; the second mixing part is provided with two second through holes; the two second through holes are connected to the first pathway and the second pathway respectively; when the first mixing part is moved, the first through hole is able to partially cover the second through hole(s), so as to control the ratio of liquids from the two second through holes. Wherein, the movement of the first mixing part may be translation, rotation, or movement in a circular path over the second mixing part.

Further, the thermostatic valve lever has a through path in vertical direction, and is connected with the first mixing part; the first end, the first mixing part, the second mixing part and a base are provided inside the valve shell.

Further, in one embodiment, the first mixing part is a valve plate or a piston, the second mixing part is a three-way pipe; the valve plate or the piston is located inside the three-way pipe; one port of the three-way pipe is connected to the liquid outputting assembly, and the other two ports of the three-way pipe are connected to the first pathway and the second pathways respectively; when the valve plate or the piston is moved, surfaces of the valve plate or the piston contacting the liquid in the other two ports of the three-way pipe are changed, so as to mix the liquid from the first pathway and the liquid from the second pathway. Wherein, the valve plate may be a integral valve plate, or may be two linked valve pieces that block the other two ends of the three-way pipe pathway respectively; the piston may be a column or other shaped cube plug, the material may be wood, soft plastic, or metal and material which has waterproof and sealing effect in conjunction, etc. For example, in the initial state, the pathway at the other two ends of the three-way pipe is blocked by the valve plate or the piston; in the next step, the thermostatic valve lever drives the valve plate or the piston to move or rotate, the pathways of the other two ends are opened, so that the liquid from the two pathways flow into the liquid outputting assembly through the first mixing part.

Further, in one embodiment of the liquid outputting assembly in this embodiment, the liquid outputting assembly may include a liquid output switch and a first liquid outputting rod; the thermostatic valve lever is connected to the liquid output switch; at least a part of the first liquid outputting rod is inserted into the inner cavity of the thermostatic valve lever. The liquid output switch includes a switch core and an elastic part; the switch core is hollow inside, with an opening at one end near the first liquid outputting rod, connecting to the first liquid outputting rod and at least one liquid inlet is provided on the outer wall and is connected to the inside of the switch core; the elastic part is provided on the outer side of the switch core and connected to the bottom end of the first liquid outputting rod.

In addition, in another embodiment of the liquid outputting assembly in this embodiment, the thermostatic valve lever is provided with a step on the inner wall; the liquid outputting assembly includes a second liquid outputting rod, and the second liquid outputting rod at least a part of the second liquid outputting rod is inserted into the inner cavity of the thermostatic valve lever; the bottom end of the second liquid outputting rod is connected to the step, and there is a gap between the outer wall of the second liquid outputting rod and the thermostatic valve lever.

Further, the second liquid outputting rod in this embodiment is hollow inside, with an opening at the up end and at least one liquid inlet is provided on the outer wall; the liquid output apparatus further includes an elastic part; the down end of the elastic part is connected to the bottom of the second liquid outputting rod and the up end is connected to the first component. Wherein, the elastic part may be a spring or other parts with reset function.

Further, the apparatus in this embodiment further includes a liquid outputting nozzle and a bracket pad, the liquid outputting nozzle being connected with the liquid outputting rod; the bracket pad being provided on the liquid outputting rod. When a container is placed on the bracket pad, the container gives the bracket pad a downward force by gravity, drives the liquid outputting assembly downward, and causes the mixed liquid to flow out from the liquid outputting nozzle.

Further, the apparatus in this embodiment further includes a liquid discharge container, being provided with an opening to facilitate the output of the liquid, the opening below the bottom of the container may be flat or may have a downward radian.

Further, the liquid output apparatus in this application, may be provided with a waterproof seal or gasket at any desired component connection.

The liquid output apparatus of this application, integrates temperature regulation and cleaning, may be hidden in the countertop mounting holes directly, does not occupy extra space on the kitchen surface, and may be installed directly on the kitchen sink countertop or directly installed above the bottom of the sink after removing the drain pan.

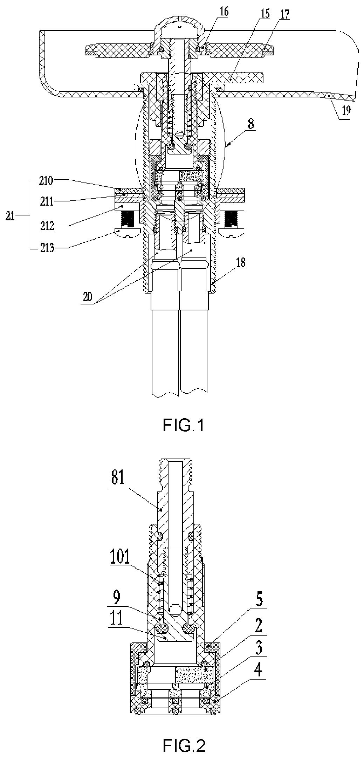

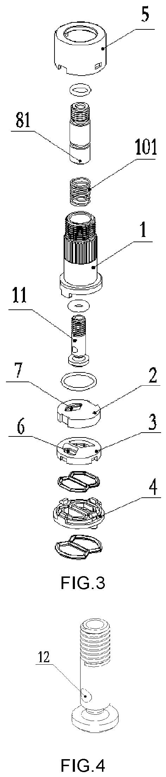

Embodiment 1: FIG. 2 and FIG. 3 provide a schematic diagram of the structure of the thermostatic mechanism and the press mechanism of the first embodiment of the present invention, wherein a valve shell 5 and a base 4 has a through path in vertical direction to install, and form a basic structure, the interior is hollow and installed with a thermostatic valve lever 1, the down end of the thermostatic valve lever 1 is installed in a cavity of the valve shell 5, the down side of the valve shell 5 is also fixed with a down porcelain tile 3, a up porcelain tile 2 is placed above the down porcelain tile 3, the up porcelain tile 2 is an non-fixed setting, the bottom end of the thermostatic valve lever 1 is provided with a fixture block, at the same time, the outer wall of the up porcelain tile 2 has a groove to joint with the above-mentioned fixture block, so that the up porcelain tile 2 may be driven by the thermostatic valve lever 1 for moving, a waterproof seal of the up porcelain tile gasket is provided between the up porcelain tile 2 and the thermostatic valve lever 1, the shape is a ring shape, a waterproof seal of the down porcelain tile gasket is provided between the down porcelain tile 3 and the base 4,the down end of the base 4 is also provided with a waterproof seal base gasket, the above down porcelain tile gasket, base gasket and the middle of the base 4 are provided with through holes adapted to a first water through hole 6 in the down porcelain tile 3; the down porcelain tile 3 is provided with two first water through holes 6, two first water through holes 6 are a hot water hole and a cold water hole respectively. The hot water hole and the cold water hole are connected with a external water pipe 20, that is, the hot water hole is connected with a hot water inlet pipe and the cold water hole is connected with a cold water inlet pipe, hot water and cold water upward flow through the corresponding water hole respectively, the up porcelain tile 2 is provided with a second water through hole 7, called a mixing water hole, by adjusting the direction of rotation of the thermostatic valve lever 1, mixing water of hot and cold with different ratios moves through the mixing water hole, and flows into the interior of the thermostatic valve lever 1 above the up porcelain tile 2, the up porcelain tile 2 may be rotated within a preset range of angle, the preset angle depends on the size and location of the first water through hole 6. In one aspect, the second water through hole 7 covers above one of the first water through holes 6 only, in a further aspect, the second water through hole 7 may covers the middle of the two first water through holes 6, so that the hot and cold water inlet ratio is the same; and the up porcelain tile 2 may be rotated to cover either of the two first water through holes 6, so that hot water and cold water may be mixed in any ratio, and may obtain cold water, hot water and mixed water.

The thermostatic valve lever 1 has a through path in vertical direction, and is provided with a tab 9 in the internal middle position, the shape of the tab 9 may be ring or other positive polygon. The present invention is preferably ring-shaped, an aisle is formed between the tabs 9, and a switch core 11 is installed and placed in the aisle. The up part of the switch core 11 is a column, the down part is a disk, the two parts are integrally connected; the up part of the column is provided with threads, and the diameter of the down part is smaller than the up part, so the bottom disk and the bottom of the tabs 9 may be provided with a water seal washer when the switch core 11 is put inside the thermostatic valve lever 1, a spring 101 is provided around the outside of the switch core 11 located on the up side of the tab 9.

The up thread of the switch core 11 is connected with the inside of the first water outputting rod 81, and has a through path in vertical direction internally, being sleeved in the through hole inside the thermostatic valve lever 1, and a waterproof seal ring is configured between the inner wall of the thermostatic valve lever 1.

The first water inlet 12 on the outer wall of the switch core 11 may be provided with one or more, depending on the actual situation.

The external hot water source and cold water source move through the external water pipe 20 to the two first water through holes 6, and then move through the second water through hole 7 to the down inner chamber of the thermostatic valve lever 1, and maintain a certain water pressure. When the first water outputting rod 81 moves downward under the action of external force, the switch core 11 is drove to move downward at the same time. As the spring 101 is compressed, a gap of corresponding height is generated between the disk at the bottom of the switch core 11 and the tab 9, where the water flows into the first water inlet 12 on the surface of the switch core 11 and finally sprays out through the first water outputting rod 81.

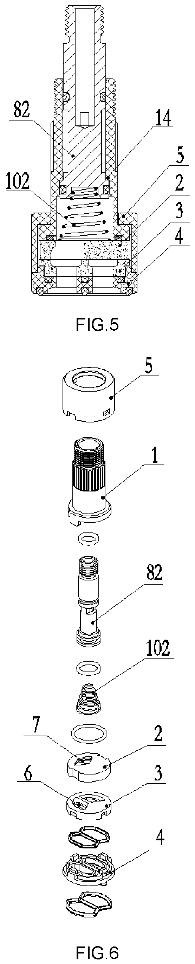

Embodiment 2: FIG. 5 and FIG. 6 provide a schematic diagram of the structure of the thermostatic mechanism and the press mechanism of the second embodiment of the present invention, wherein a valve shell 5 and a base 4 has a through path in vertical direction to install, and form a basic structure, the interior is hollow and installed with a thermostatic valve lever 1, the down end of the thermostatic valve lever 1 is installed in a cavity of the valve shell 5, the down side of the valve shell 5 is also fixed with a down porcelain tile 3, a up porcelain tile 2 is placed above the down porcelain tile 3, the up porcelain tile 2 is an non-fixed setting, the bottom end of the thermostatic valve lever 1 is provided with a fixture block, at the same time, the outer wall of the up porcelain tile 2 has a groove to joint with the above-mentioned fixture block, so that the up porcelain tile 2 may be driven by the thermostatic valve lever 1 for moving, a waterproof seal of the up porcelain tile gasket is provided between the up porcelain tile 2 and the thermostatic valve lever 1, the shape is a ring shape, a waterproof seal of the down porcelain tile gasket is provided between the down porcelain tile 3 and the base 4,the down end of the base 4 is also provided with a waterproof seal base gasket, the above down porcelain tile gasket, base gasket and the middle of the base 4 are provided with through holes adapted to a first water through hole 6 in the down porcelain tile 3; the down porcelain tile 3 is provided with two first water through holes 6, two first water through holes 6 are a hot water hole and a cold water hole respectively. The hot water hole and the cold water hole are connected with a external water pipe 20, that is, the hot water hole is connected with a hot water inlet pipe and the cold water hole is connected with a cold water inlet pipe, hot water and cold water upward flow through the corresponding water hole respectively, the up porcelain tile 2 is provided with a second water through hole 7, called a mixing water hole, by adjusting the direction of rotation of the thermostatic valve lever 1, mixing water of hot and cold with different ratios moves through the mixing water hole, and flows into the interior of the thermostatic valve lever 1 above the up porcelain tile 2, the up porcelain tile 2 may be rotated within a preset range of angle, the preset angle depends on the size and location of the first water through hole 6. In one aspect, the second water through hole 7 covers above one of the first water through holes 6 only, in a further aspect, the second water through hole 7 may covers the middle of the two first water through holes 6, so that the hot and cold water inlet ratio is the same; and the up porcelain tile 2 may be rotated to cover either of the two first water through holes 6, so that hot water and cold water may be mixed in any ratio, and may obtain cold water, hot water and mixed water.

The water outputting assembly 8 of the present embodiment consists of a second water outputting rod 82, the up part of the second water outputting rod 82 has the same structure as the switch core in the first embodiment, the down part is connected to a column, the surface of the column provides a second water inlet 13, the number of the second water inlet 13 is determined according to the actual situation, the down part of the column is integrally connected with a bottom plate, the middle of the bottom plate is provided with a ring groove for placing a waterproof seal ring.

The second water outputting rod 82 and thermostatic valve lever 1 is provided with a valve lever seal ring to prevent water leakage.

The center of inner wall of the thermostatic valve lever 1 is provided with a ladder pattern step 14, the step 14 is used to limit the upward movement of the second water outputting rod 82 and control its motion stroke.

The down part of the second water outputting rod 82 provides a taper spring 102, the taper spring 102 is narrow at the top and wide at the bottom, and the down end is provided above the up porcelain title 2.

The external hot water source and cold water source move through the external water pipe 20 to the two first water through holes 6, and then move through the second water through hole 7 to the down inner chamber of the thermostatic valve lever 1, and maintain a certain water pressure. When the second water outputting rod 81 moves downward under the action of external force, the spring 102 is compressed and the water source passes through the gap between the second water output pipe 82 and the thermostatic valve lever 1, then passes through the second water inlet 13 of the second water output pipe 82, and finally sprays out through the up port of the second water outputting rod 82.

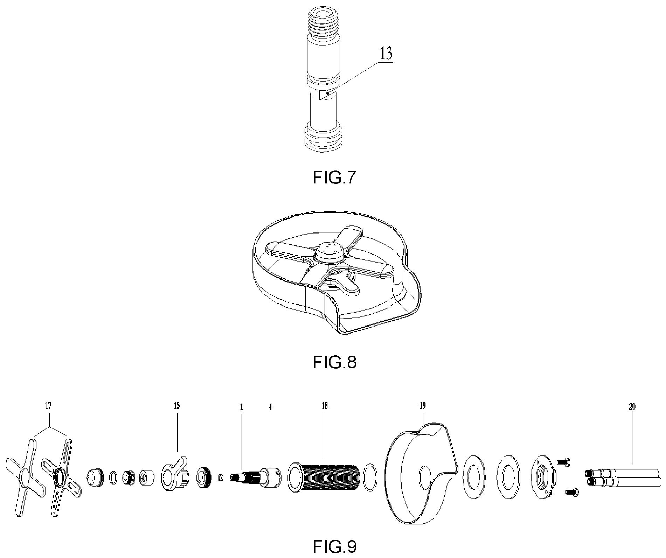

Embodiment 3: the up edge of the first water output rob 81 and the second water output rob 82 in the above two embodiments are provided with threads for connecting the water outputting nozzle 16, and the perimeter of the water outputting nozzle 16 is provided with a bracket pad 17; the water outputting nozzle 16 wraps the entire up part of the first water output rob 81 and the second water output rob 82, and a plurality of spray holes is provided for multi-angle spray cleaning of the cup; the bracket pad 17 is used for support when the cup is upside down, and may be provided in the shape of a petal as shown in FIG 9, or may be designed as a ring-shaped plate, in order to support the upside-down cup.

The up edge of the thermostatic valve lever 1 is sleeved to a thermostatic handle 15, by turning the thermostatic handle 15, driving the thermostatic valve lever 1 and the up porcelain tile 2 to rotate, so that the corresponding changes between the second water through hole in the up porcelain tile 2 and the first water through hole 6 in the down porcelain tile 3, adjusting the ratio of hot and cold water, and finally making the water temperature for spray cleaning cups meet the demands of users.

A body 18 is fixed on the outside of the thermostatic valve lever 1, and the body 18 plays a protective and isolating role for the internal components. A locking part is fixedly arranged on the external surface of the body 18 to fix the device as a whole, and the device may be installed on the kitchen sink counter or on the bottom of the sink by locking part.

At the top of the body 18, a drainage tray 19 is provided with an opening for drainage to the outside, and the opening is inclined downward to facilitate the flow of wastewater after cleaning.

Embodiment 4: An apparatus for mixing water in the embodiment may include technical features or a combination of features of all of the above embodiments thereof.

An embodiment relates to a tableware cleaning apparatus that includes the water mixing apparatus in any of the above embodiments.

The tableware cleaning apparatus of the embodiment may be used specifically for cleaning containers such as water cups (glass, thermos, plastic cups, etc.), bowls, tubs, milk bottles and wine cups, etc.

It is provided when the tableware is placed on the cleaning support, the water outputting assembly moves in the direction of the first end under the gravity of the tableware, the water flows out through the water outputting assembly to clean the tableware thereby.

For example, to clean a goblet, the two pathways are a cold water pathway and a hot water pathway respectively, the user toggles a handle for regulating temperature in advance, it leads to mix hot and cold water in a certain ratio to make tepid water. Then the user place the goblet upside down (mouth down) on the bracket pad, at this time, as the goblet moves under gravity, the bracket pad also moves down, the tepid water sprays from the nozzle, and the goblet is cleaned by the rinse of tepid water automatically. After being cleaned, the user takes away the goblet, and the bracket pad loses the external force of the goblet. Under the action of the internal spring of the thermostatic valve lever, the bracket pad returns to its original position.

The apparatus are provided by the present invention may freely adjust the ratio of mixing cold water and hot water, and combine with pressurized spray to clean the inner wall of the container. The apparatus may dissolve and clean the residue and juice on the inner wall of the container, with short time and high efficiency, and is suitable for promotion and application.

The present invention provides an ingenious structure apparatus, temperature regulation and cleaning are integrated, and may be directly installed and hidden in the installation hole of the countertop, without occupying extra space, and may be installed directly on the kitchen sink countertop or above the bottom of the sink after removing the drainage tray.

To better illustrate the embodiment, the components of the embodiment are assembled with the apparatus in embodiment 1, and FIG 1 shows a schematic diagram after assembly.

Although embodiments of the present invention have been shown and described, it is understandable to those of ordinary skill in the art that these embodiments may be varied, modified, replaced and altered in a variety of ways without deviating from the principle and spirit of the invention, and the scope of the invention is limited by the attached claims and their equivalents.

## Claims

1. An apparatus for mixing liquid, comprising:
a thermostatic valve lever, connected to both a first pathway and a second pathway, the thermostatic valve lever has a first end near the first pathway and the second pathway; a liquid outputting assembly is provided inside the thermostatic valve lever; and
when the liquid outputting assembly moves towards the first end, liquid in the thermostatic valve lever passes through the liquid outputting assembly and flows out in a direction away from the first pathway and second pathway.

2. The apparatus according to the claim 1, wherein the first end of the thermostatic valve lever is connected to a first component, the first component being connected to both the first pathway and the second pathway, making the liquid in the first pathway mix with the liquid in the second pathway within the thermostatic valve lever in a first ratio, the first ratio being controlled by the first component; and
the liquid outputting assembly is sleeved inside the thermostatic valve lever,
when the liquid outputting assembly moves towards the first end of the thermostatic valve lever, liquid inside the thermostatic valve lever moves through the liquid outputting assembly towards a second end of the thermostatic valve lever and thus flows out , wherein the second end is opposite to the first end.

3. The apparatus according to the claim 2, wherein the first component includes a first mixing part and a second mixing part;
one end of the first mixing part is connected with the first end, and the other end of the first mixing part is connected with the second mixing part; by moving the thermostatic valve lever, the first mixing part is moved, so that the liquid from the first pathway and the liquid from the second pathway are mixed.

4. The apparatus according to the claim 3, wherein the first mixing part is provided with a first through hole; the second mixing part is provided with two second through holes; the two second through holes are connected to the first pathway and the second pathway respectively; when the first mixing part is moved, the first through hole is able to partially cover the second through hole(s), so as to control the ratio of liquids from the two second through holes.

5. The apparatus according to the claim 3 or 4, the thermostatic valve lever has a through path in vertical direction, and is connected with the first mixing part; the first end, the first mixing part, the second mixing part and a base are provided inside a valve shell.

6. The apparatus according to any of the claims 3 to 5, wherein the first mixing part is a valve plate or piston, the second mixing part is a three-way pipe; the valve plate or the piston is located inside the three-way pipe; one port of the three-way pipe is connected to the liquid outputting assembly, the other two ports of the three-way pipe are connected to the first pathway and the second pathway respectively; when the valve plate or the piston is moved, surfaces of the valve plate or the piston contacting the liquid in the other two ports of the three-way pipe are changed, so as to mix the liquid from the first pathway and the liquid from the second pathway.

7. The apparatus according to any of the claims 1 to 6, the liquid outputting assembly includes a liquid output switch and a first liquid outputting rod; the thermostatic valve lever is connected to the liquid output switch; at least a part of the first liquid outputting rod is inserted into the inner cavity of the thermostatic valve lever.

8. The apparatus according to the claim 7, the liquid output switch includes a switch core and an elastic part;
the switch core is hollow inside, with an opening at one end near the first liquid outputting rod, connecting to the first liquid outputting rod, and at least one liquid inlet is provided on the outer wall and is connected to the inside of the switch core; and
the elastic part is provided on the outer side of the switch core and connected to the bottom end of the first liquid outputting rod.

9. The apparatus according to any of the claims 2 to 8, the thermostatic valve lever is provided with a step on the inner wall; the liquid outputting assembly includes a second liquid outputting rod, at least a part of the second liquid outputting rod is inserted into the inner cavity of the thermostatic valve lever; the bottom end of the second liquid outputting rod is connected to the step, and there is a gap between the outer wall of the second liquid outputting rod and the thermostatic valve lever.

10. The apparatus according to the claim 9, further including an elastic part;
the second liquid outputting rod is hollow inside, the second liquid outputting rod is provided with an opening at one end wherein the end is not inserted into the inner cavity of the thermostatic valve lever, and at least one liquid inlet is provided on the outer wall; and
one end of the elastic part is connected to the bottom of the second liquid outputting rod, the other end of the elastic part is connected to the first component.

11. The apparatus according to any of the claims 1 to10, further including a valve shell and a base, wherein the first end, the first component and the base are provided inside the valve shell.

12. The apparatus according to any of the claims 7 to 10, further including a liquid outputting nozzle and a bracket pad, the liquid outputting nozzle being connected to the liquid outputting rod; the bracket pad being provided on the liquid outputting rod.

13. The apparatus according to any of the claims 1 to 12, further including a liquid discharge container, wherein the liquid discharge container has an opening.

14. The apparatus according to any of the claims 1 to 13 the thermostatic valve lever is provided with a handle for regulating temperature.

15. The apparatus according to the claim 1, wherein the liquid outputting assembly is provided inside the thermostatic valve lever, one end of the liquid outputting assembly is provided with a liquid outputting nozzle, and the liquid outputting assembly is provided with a bracket pad; and
when the bracket pad moves toward the other port of the liquid outputting assembly, the liquid in the thermostatic valve lever passes through the liquid outputting assembly and is ejected through the liquid outputting nozzle.
